# EUROPÄISCHE PATENTSCHRIFT

(11) **EP 3 931 457 B1**
(45) Veröffentlichungstag und Bekanntmachung des Hinweises auf die Patenterteilung: **14.06.2023**
(21) Anmeldenummer: 20705896.7
(22) Anmeldetag: 10.02.2020
(51) Int. Cl.: F16D 3/223

(54) **GLEICHLAUFFESTGELENK**
FIXED CONSTANT VELOCITY JOINT
JOINT HOMOCINÉTIQUE FIXE

(30) Priorität: 25.02.2019 DE 102019202535
(43) Veröffentlichungstag der Anmeldung: 05.01.2022
(73) Patentinhaber: VOLKSWAGEN AKTIENGESELLSCHAFT, 38440 Wolfsburg (DE)
(72) Erfinder: SCHAAF, Gregor, 38162 Cremlingen (DE); HILLEBRENNER, Friedrich, 38440 Wolfsburg (DE)
(86) Internationale Anmeldenummer: PCT/EP2020/053234
(87) Internationale Veröffentlichungsnummer: WO 2020/173691

(56) Entgegenhaltungen:
- DE-A1- 3 134 272
- DE-A1-102010 035 433
- DE-B4-112007 003 190
- US-A1- 2005 261 066

## Beschreibung

Die Erfindung bezieht sich auf ein Gleichlauffestgelenk umfassend ein Gelenkaußenteil mit einer Vielzahl von Kugellaufbahnen am Innenumfang, ein Gelenkinnenteil mit einer Vielzahl von Kugellaufbahnen am Außenumfang, wobei jeweils eine Kugellaufbahn am Gelenkaußenteil und eine Kugellaufbahn am Gelenkinnenteil ein Kugellaufbahnpaar bilden, eine Kugel je Kugellaufbahnpaar zur Drehmomentübertragung und einen Käfig, der zwischen dem Gelenkaußenteil und dem Gelenkinnenteil angeordnet ist und Fenster aufweist, in denen die Kugeln aufgenommen sind.

An Vorderachsseitenwellen von Kraftfahrzeugen werden als radseitige Gleichlauffestgelenke Gelenke in RF-/UF-Bauart mit ungeschrägten Kugellaufbahnen eingesetzt, welche im Hinblick auf einen Lenkeinschlag Beugewinkel von mehr als 40° ermöglichen. Der Käfig ist an gekrümmten Wandabschnitten des Gelenkaußenteils und des Gelenkinnenteils geführt. Beim Beugen des Gelenks werden die Kugeln durch den Käfig in einer Gelenkmittelebene gehalten, die zwischen den im Fall einer Beugung des Gelenks zueinander angewinkelten Mittelachsen des Gelenkaußenteils und des Gelenkinnenteils im Kreuzungspunkt der Mittelachsen als Symmetrieebene aufgespannt wird. Die Kugellaufbahnmitten der Kugellaufbahnen eines jeden Kugellaufbahnpaares sind zu der Gelenkmittelebene unter jedem Beugewinkel zueinander spiegelsymmetrisch. Als Kugellaufbahnmitte wird vorliegend die Kurve verstanden, welche der Mittelpunkt der Kugel beim Durchschieben entlang der jeweiligen Kugellaufbahn erzeugt.

Zur Gewährleistung der Funktion des Gelenks werden die Kugeln bei einer Beugung des Gelenks in diese Gelenkmittelebene gesteuert. Hierzu sind unterschiedliche Steuerungssysteme bekannt. Ein erstes Steuerungssystem beruht auf einem entgegengesetzten axialen Offset der Krümmungsmittelpunkte der Kugellaufbahnen am Gelenkaußenteil und am Gelenkinnenteil vom Gelenkbeugezentrum (vgl. DE 22 52 827 A). Ein zweites Steuerungssystem nutzt einen axialen Offset der Krümmungsmittelpunkte der sphärischen Führungsflächen zwischen dem Käfig und dem Gelenkinnenteil sowie dem Käfig und dem Gelenkaußenteil (vgl. US 1,975,758 A). Zudem können beide Steuerungssysteme miteinander kombiniert werden (vgl. DE 30 00 119 A).

Für eine hinreichende Steuerung auch bei mittleren und großen Beugewinkeln, wie sie an radseitigen Gleichlauffestgelenken an der Vorderachse auftreten, sind zur Vermeidung von akustischen Störungen, Geräuschen oder gar eines Klemmens ausreichend große Grundsteuerwinkel und somit axiale Offsets erforderlich. Dies führt allerdings im Hauptbetriebsbeugewinkelbereich zu hohen Axialkraftkomponenten im Gelenk und dementsprechend einer hohen inneren Reibung, wodurch der Wirkungsgrad des Gelenks beeinträchtigt wird.

Lösungsansätze aus jüngerer Zeit bestehen an einem gattungsgemäßen Gleichlauffestgelenkt nach dem Oberbegriff von Patentanspruch 1 in einer Verringerung des Laufbahnoffsets in Verbindung mit einer Erhöhung der Anzahl der Kugeln von üblicherweise sechs auf acht Kugeln (vgl. EP 0 802 341 B2) sowie in sogenannten Gegenbahngelenken (vgl. DE 100 60 119 A1), bei denen die Ausrichtung des Öffnungswinkels der Kugellaufbahnpaare von Kugellaufbahn zu Kugellaufbahn abwechselt. Durch die Erhöhung der Kugelzahl soll auch bei kleinen Steuerwinkeln eine noch ausreichende Positionierung der Gelenkbauteile zueinander gewährleistet werden. An Gegenbahngelenken sollen sich die am Käfig angreifenden Kräfte ausgleichen.

Diese Gelenkbauformen sind allerdings herstellungstechnisch aufwändig. Mangels Alternativen wurde dieser Nachteil bisher jedoch in Kauf genommen.

Ferner ist aus DE 10 2017 048 327 A1 an einem gattungsgemäßen Gleichlauffestgelenkt nach dem Oberbegriff von Patentanspruch 1 bekannt, den über die Käfigführung realisierten Steuerwinkel größer als den über die Kugellaufbahnen realisierten Steuerwinkel auszuführen, um die Reibung zwischen den Kugeln und dem Käfig sowie weiterhin zwischen dem Käfig und den Käfigführungsflächen zu verringern und gleichwohl die Steuerung der Kugeln in die homokinetische Gelenkmittelebene des Gelenks zu gewährleisten, wobei die Käfigsteuerung den Hauptanteil der Steuerung übernimmt.

Weitere Beispiele nach dem Oberbegriff von Anspruch 1 sind aus US 2005/261066 A1, DE 31 34 272 A1, DE 11 2007 003190 B4 und DE 10 2010 035433 A1 bekannt.

Der Erfindung liegt die Aufgabe zugrunde, hier Abhilfe zu schaffen. Insbesondere zielt die Erfindung darauf ab, bei Gleichlauffestgelenken der eingangs genannten Art Wirkungsgrad und Lebensdauer mit geringerem herstellungstechnischem Aufwand weiter zu verbessern.

Diese Aufgabe wird durch ein Gleichlauffestgelenk gemäß Patentanspruch 1 gelöst.

Hiermit wird die ideale Gleichlaufbedingung eines Gleichlaufgelenks verletzt. Die Verletzung durch die Verlagerung des Kugelschwerpunkts ist vorliegend größer als bei realen Gleichlauffestgelenken. Die Auswirkungen können jedoch in einem Ausmaß gehalten werden, welche realen Gleichlauffestgelenken vergleichbar sind und im Betrieb keinen Einfluss auf die Wirkungsweise haben und auch vom Fahrer nicht wahrnehmbar sind, denn auch bei realen Gleichlaufgelenken, welche die Kugeln in die Gelenkmittelebene steuern, treten aufgrund von Fertigungstoleranzen, innerer Reibung und externen Kräften Abweichungen vom idealen Gleichlauf auf.

Gleichwohl werden mit der erfindungsgemäßen Lösung überraschenderweise der Wirkungsgrad und die Lebensdauer eines gattungsgemäßen Gleichlauffestgelenks verbessert.

Da mit der erfindungsgemäßen Lösung auf eine Erhöhung der Anzahl der Kugeln im Gelenk oder auf die aufwändige Fertigung gegenläufiger Kugellaufbahnen verzichtet werden kann, ergibt sich gegenüber herkömmlichen Rzeppa-Gelenken kein signifikanter fertigungstechnischer Mehraufwand.

Die Verlagerungsrichtung des Kugelschwerpunkts gegenüber der Symmetrieebene der Mittelachsen von An- und Abtriebsseite entspricht dabei der Richtung des Kraftvektors der Steuerkraft aus den axialen Offsets der Kugellaufbahnmitten auf die Kugeln bei gestrecktem Gelenk, d.h. bei einem Gelenkbeugewinkel von β = 0.

Das Versetzen des Kugelschwerpunkts aus der Symmetrie kann auch als relative Verlagerung der Kugellaufbahnmitten außerhalb der Spiegelsymmetrie bzw. Gelenkmittelebene verstanden werden, welche neue Gestaltungsmöglichkeiten bietet.

Vorteilhafte Ausgestaltungen der Erfindung sind Gegenstand weiterer Patentansprüche.

Das Gleichlauffestgelenk weist vorzugsweise eine Betriebsposition auf, in der für mindestens ein Laufbahnsystem gleichartiger Kugellaufbahnpaare der gemeinsame Schwerpunkt aller Kugeln gegenüber der Gelenkmittelebene, welche als Symmetrieebene der Mittelachsen des Gelenkaußenteils und des Gelenkinnenteils im Schnittpunkt dieser Mittelachsen bei gebeugtem Gleichlauffestgelenk definiert ist, den besagten axialen Versatz aufweist.

Gemäß einer weiteren vorteilhaften Ausgestaltung der Erfindung ist vorgesehen, dass der Käfig mit seiner Außenseite am Gelenkaußenteil und mit seiner Innenseite am Gelenkinnenteil geführt ist, wobei die Krümmungszentren der beiden Führungen axial zueinander versetzt sind.

Ferner können die Krümmungszentren der Kugellaufbahnmitten des Gelenkaußenteils und des Gelenkinnenteils axial zueinander versetzt sein.

Die verschiedenen Steuerprinzipien sind auch miteinander kombinierbar. In einer weiteren Ausführungsvariante ist vorgesehen, dass die Mitte zwischen den Krümmungszentren der Käfigführungen zur Mitte zwischen den Krümmungszentren der Laufbahnen axial zueinander versetzt ist.

Unter fertigungstechnischen Gesichtspunkten sowie im Hinblick auf geringe Fertigungstoleranzen ist es von Vorteil, wenn gemäß einer weiteren Ausführungsvariante die Käfigführung am Gelenkaußenteil und/oder am Gelenkinnenteil zumindest eine kugelige Kontaktfläche am Käfig oder am korrespondierenden Gelenkbauteil aufweist.

Gemäß einer weiteren Ausführungsvariante ist vorgesehen, dass das Gleichlauffestgelenk als Gegenbahngelenk mit mindestens zwei Laufbahnsystemen ausgebildet ist.

Nachfolgend wird die Erfindung anhand eines in der Zeichnung dargestellten Ausführungsbeispiels näher erläutert. Die Zeichnung zeigt in:
- Figur 1: eine Außenansicht eines Gleichlauffestgelenks nach einem Ausführungsbeispiel der Erfindung in gebeugtem Zustand,
- Figur 2: eine schematische Darstellung zur Veranschaulichung des Prinzips der Erfindung,
- Figur 3: eine schematische Darstellung eines herkömmlichen Rzeppa-Gleichlauffestgelenks mit axialem Laufbahnoffset, wobei die Käfigführung in die Laufbahnebene projiziert dargestellt ist, und in
- Figur 4: eine schematische Darstellung analog Fig. 3 mit verschobenem Kugelschwerpunkt nach der Erfindung mit Darstellung der resultierenden Kraftwirkungslinien der Käfigführung.

Das Ausführungsbeispiel zeigt ein Gleichlauffestgelenk 1 in Rzeppa-Bauweise, das beispielsweise in eine Gelenkwelle eines Kraftfahrzeugs eingebaut werden kann, um eine Antriebsleistung von einem Getriebe zu einem gelenkten Fahrzeugvorderrad zu übertragen. Es gestattet maximale Beugewinkel von mehr als 40 und bis zu etwa 52 Grad.

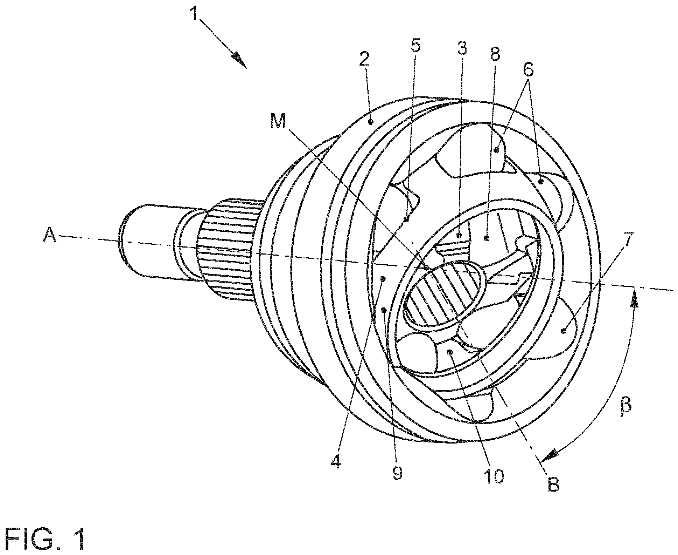

Wie Figur 1 zeigt, umfasst das Gleichlauffestgelenk 1 zunächst ein Gelenkaußenteil 2 und ein Gelenkinnenteil 3. Zwischen dem Gelenkaußenteil 2 und dem Gelenkinnenteil 3 ist ein Käfig 4 angeordnet, der eine Vielzahl von Fenstern 5 zur Aufnahme jeweils einer Kugel 6 ausbildet.

Das Gelenkaußenteil 2 weist an seinem Innenumfang eine Vielzahl von rillenartigen Kugellaufbahnen 7 auf. In gleicher Weise sind am Außenumfang des Gelenkinnenteils 3 eine Vielzahl von rillenartigen Kugellaufbahnen 8 ausgebildet, die den Kugellaufbahnen 7 des Gelenkaußenteils 2 gegenüberliegen, um entsprechende Kugellaufbahnpaare zu bilden. Die Kugellaufbahnpaare nehmen jeweils eine Kugel 6 zur Drehmomentübertragung zwischen dem Gelenkaußenteil 2 und dem Gelenkinnenteil 3 auf.

Bei dem in Figur 1 beispielhaft dargestellten Gleichlauffestgelenk 1 sind die Öffnungswinkel sämtlicher Kugellaufbahnpaare 7/8 zur Öffnungsseite des Gleichlauffestgelenks 1 gerichtet. Alle Kugellaufbahnpaare 7/8 sind gleichartig ausgebildet, so das insgesamt ein einziges Laufbahnsystem vorhanden ist.

Die Anzahl der Kugellaufbahnpaare 7/8 und damit der Kugeln beträgt vorzugsweise sechs, kann jedoch auch größer oder kleiner gewählt werden und beispielsweise acht betragen.

Die Kugellaufbahnen 7 des Gelenkaußenteils 2 können beispielsweise in einer die Mittelachse A des Gelenkaußenteils 2 einschließenden Radialebene zumindest abschnittsweise gekrümmt sein.

Ferner können die Kugellaufbahnen 8 des Gelenkinnenteils 3 in einer die Mittelachse B des Gelenkinnenteils 3 einschließenden Radialebene zumindest abschnittsweise gekrümmt sein.

Der Verlauf der Kugellaufbahnen 7 und 8 ist dabei vorzugsweise derart, dass sämtliche Kugellaufbahnpaare zur gleichen Seite des Gleichlauffestgelenks 1 hin öffnen.

Jedoch sind bei der Verwirklichung der Erfindung auch andere Verläufe der Kugellaufbahnen 7 und 8 möglich.

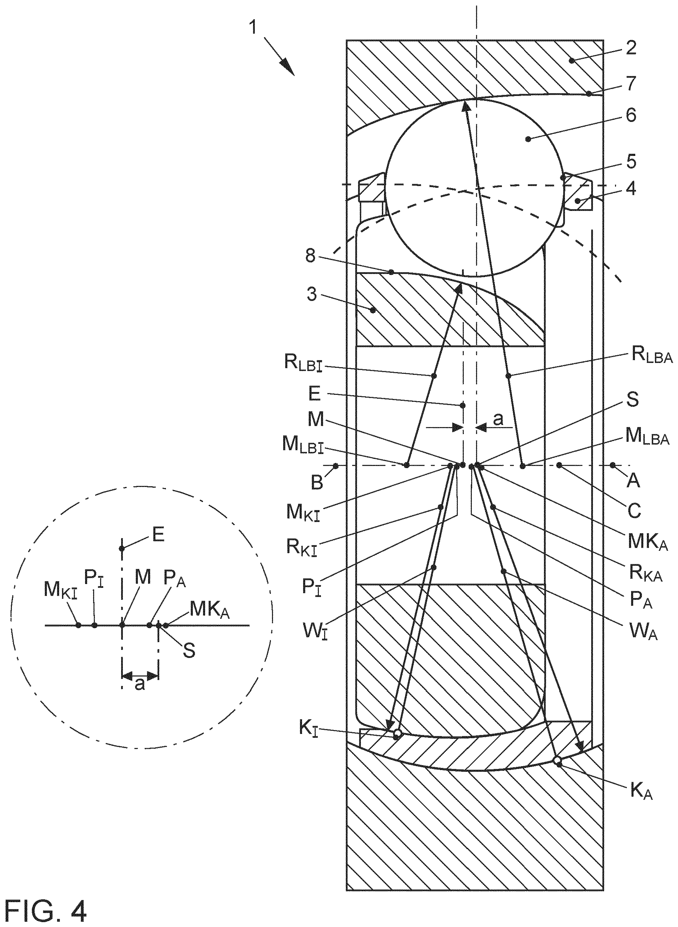

Wie Fig. 4 entnommen werden kann, können die Krümmungszentren M_{LBA} und M_{LBI} der Kugellaufbahnmitten der Kugellaufbahnen 7 und 8 des Gelenkaußenteils 2 und des Gelenkinnenteils 3 axial zueinander versetzt sein. Gegebenenfalls kann zusätzlich auch ein radialer Offset zu den Mittelachsen A und B vorgesehen sein. Zudem sind bei dem vorliegenden Ausführungsbeispiel die Kugellaufbahnen 7 und 8 kreisbogenförmig dargestellt. Jedoch können diese z.B. abschnittsweise von einer strengen Kreisbogenform abweichen, beispielsweise durch gerade, stärker oder weniger stark gekrümmte Laufbahnabschnitte.

Zwischen den Kugellaufbahnen 7 bzw. 8 weisen das Gelenkaußenteil 2 wie auch das Gelenkinnenteil 3 Wandabschnitte zur Führung des Käfigs 4 auf.

Bei dem dargestellten Ausführungsbeispiel gleitet der Käfig 4 mit einer im Wesentlichen sphärischen Außenfläche 9 in einer Käfigführungsfläche 11 des Gelenkaußenteils 2 und mit einer im wesentlichen sphärischen Innenfläche 10 an einer Käfigführungsfläche 12 des Gelenkinnenteils 3. Die Krümmungsmittelpunkte der Außen- und Innenfläche 9 und 10 des Käfigs 4 sind in Fig. 4 mit M_{KA} und M_{KI} bezeichnet. Die Käfigführungsflächen 11 und 12 am Gelenkaußenteil 2 und am Gelenkinnenteil 3 können ebenfalls sphärisch ausgeführt sein. Durch die Krümmung der Käfigführungsflächen 11 und 12 ist der Käfig 4 zwischen dem Gelenkinnenteil 2 und dem Gelenkaußenteil 3 axial gesichert, kann jedoch schwenken. Die sphärischen Außen- und Innenflächen 9 und 10 des Käfigs 4 sowie die Käfigführungsflächen 11 und 12 können von einer Kugelform abweichen, solange eine Führung des Käfigs 4 erhalten bleibt. Im Hinblick auf eine möglichst genaue Positionierung zueinander unter Berücksichtigung unvermeidlicher Fertigungstoleranzen ist es jedoch empfehlenswert, zumindest eine Kontaktfläche je Paarung sphärisch auszuführen.

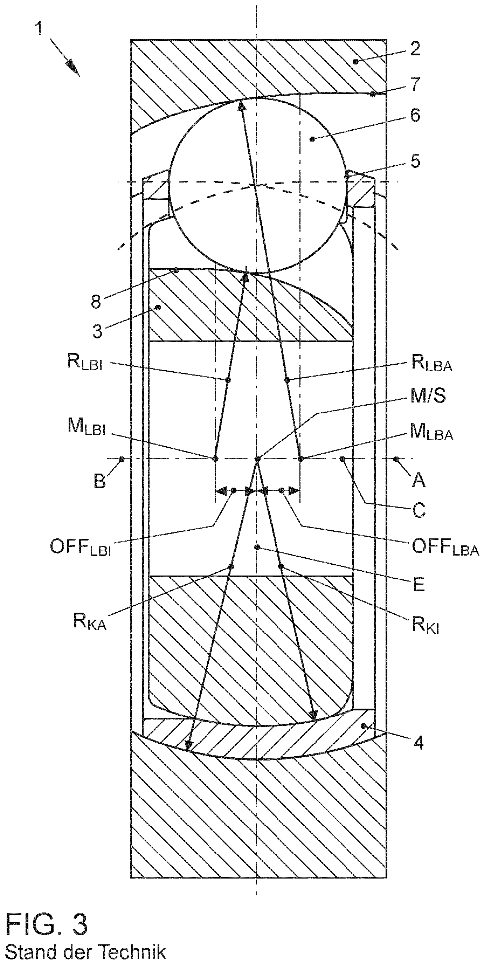

Über den Käfig 4 werden bei einem herkömmlichen Rzeppa-Gelenk gemäß Fig. 3 bei einer Beugung des Gleichlauffestgelenks 1 die Kugeln 6 in dessen Gelenkmittelebene E gehalten. Diese Gelenkmittelebene E stellt gleichzeitig die Symmetrieebene der Mittelachsen A und B des Gelenkaußenteils 2 und des Gelenkinnenteils 3 dar und verläuft durch den Schnittpunkt M dieser Mittelachsen A und B bei gebeugtem Gelenk. Der gemeinsame Kugelschwerpunkt S, d.h. der Massenmittelpunkt sämtlicher Kugeln 6, liegt dort in der Gelenkmittelebene E.

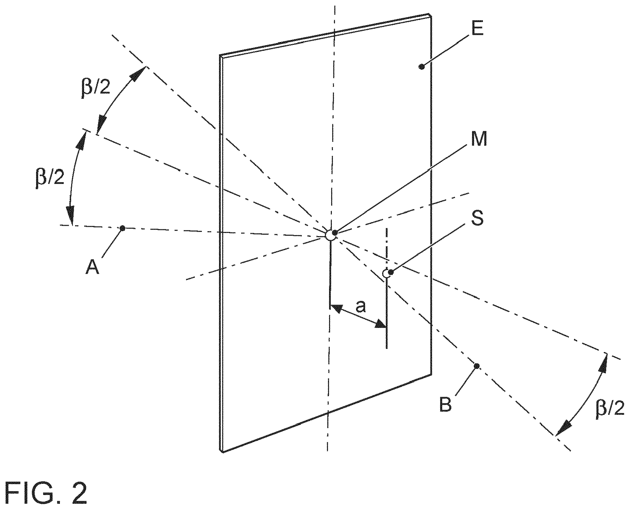

Erfindungsgemäß ist der Kugelschwerpunkt S hingegen gegenüber der Gelenkmittelebene E um den axialen Versatz a verschoben, d.h. die Kugeln 6 laufen nicht mehr in der Gelenkmittelebene E, wie dies in den Fig. 2 und 4 zu erkennen ist.

Die Verlagerungsrichtung des Kugelschwerpunkts S gegenüber der Gelenkmittelebene E entspricht dabei der Richtung des Kraftvektors der Steuerkraft aus den axialen Offsets der Kugellaufbahnen 7 und 8 auf die Kugeln 6. Die Kugeln 6 sind gegenüber den theoretischen Kugellaufbahnschnittpunkten verschoben. Hierdurch wird ein strenger Gleichlauf verletzt. Jedoch ermöglicht dies überraschenderweise eine Verbesserung des Wirkungsgrads und der Lebensdauer des Gelenkes. Eine gleichmäßigere Kraftverteilung auf die Kugeln 6 und die Kugellaufbahnen 7 und 8 sowie die Kraftübertragung der axialen Abstützkräfte sind dabei Zielgrößen der Optimierung. Trotz der erfindungsgemäßen Asymmetrie bleibt die Abweichung im Gleichlauf in einer Größenordnung, wie sie im Stand der Technik ebenfalls akzeptiert wird.

Wie Fig. 4 entnommen werden kann, weist der gemeinsame Schwerpunkt S aller Kugeln 6 gegenüber der Gelenkmittelebene E den axialen Versatz a auf. Die Gelenkmittelebene E stellt eine Ebene durch einen Punkt M dar und verläuft normal zur Mittelachse C des Käfigs 4. Der Punkt M in Fig. 4 ist der Mittelpunkt zwischen zwei Punkten P_{A} und P_{I}. P_{A} ist dabei der Schnittpunkt der Mittelachse C des Käfigs 4 mit der Wirklinie W_{A} der resultierenden Normalkraft aus dem Kontakt K_{A} des Käfigs 4 mit dem Gelenkaußenteil 2. P_{I} ist der Schnittpunkt der Mittelachse C des Käfigs 4 mit der Wirklinie W_{I} der resultierenden Normalkraft aus dem Kontakt K_{I} des Käfigs 4 mit dem Gelenkinnenteil 3. Bei sehr kleinem Spiel, d.h. einer im Wesentlichen spielfreien Käfigführung, fallen die Punkte P_{A} und P_{I} mit dem jeweiligen Krümmungsmittelpunkt M_{KI} und M_{KA} der Außen- und Innenfläche 10 und 9 des Käfigs 4 zusammen. Erfolgt die Käfigführung mit größerem Spiel oder einer von der Kugelform abweichenden Kontur, können die Punkte P_{A} und P_{I} von den Krümmungsmittelpunkten M_{KI} und M_{KA} abweichen, wie dies in Figur 4 zusätzlich angedeutet ist.

Das Ausführungsbeispiel gemäß Fig. 4 kann aus Fig. 3 dadurch erhalten werden, dass die innere Käfigführung, d.h. die sphärische Innenfläche 10 des Käfigs 4 in negativer Richtung, d.h. in den dargestellten Figuren 3 nach links auf der Achse C des Käfigs 4 versetzt wird. Das Gelenkaußenteil 2 und das Gelenkinnenteil 3 bleiben bei dem Ausführungsbeispiel in ihrer Formgebung unverändert. Im Zusammenbau verändert sich hierdurch die Lage des Gelenkinnenteils 3 im Gelenkaußenteil 2 genauso wie die Position der Kugeln 6. Jedoch sind auch andere Gestaltungen möglich, um den axialen Versatz a zu erzeugen. Fig. 4 dient hier lediglich als Anschauungsbeispiel für das der Erfindung zugrundeliegende Prinzip.

Erfindungsgemäß ist der maximale axiale Versatz a des gemeinsamen Kugelschwerpunkts S zur Gelenkmittelebene E bei gestrecktem Gelenk größer als 0,2 mm und beträgt maximal 1,0 mm. Vorzugsweise kann der maximale axiale Versatz a auf 0,3 mm bis 1 mm eingestellt werden.

Dies gilt insbesondere für Gleichlauffestgelenke 1 mit einem Kugelmitten-Teilkreisdurchmesser PCD in der Größenordnung von 40 bis 80 mm.

Bei der Konstruktion des Gleichlauffestgelenks 1 sollte es den Kugeln 6 in jedem Betriebspunkt, d.h. bei jedem möglichen Beugewinkel β möglich sein, sich in den Laufbahnschnittpunkten aufzuhalten. Die Verläufe der Kugellaufbahnen 7 und 8 sowie die Käfigführungen 9/11 und 10/12 und Spiele werden entsprechend gestaltet.

So kann in einer Ausführungsvariante die Führung der Bauteile untereinander so gestaltet sein, dass sich der relative axiale Versatz a des Kugelschwerpunkts S bis zu den oben genannten maximalen Werten frei einstellen kann, d.h. es kann sich je nach Betriebspunkt bzw. Beugewinkel auch ein kleinerer axialer Versatz ergeben. Die aufgrund des Laufbahnöffnungswinkels auf den Käfig 4 wirkenden Kräfte führen jedoch bei den üblichen Betriebspunkten des erfindungsgemäßen Gleichlauffestgelenks 1 tendenziell zu der genannten maximal möglichen Verlagerung. Dabei ist der maximale axiale Versatz a größer als jener, der sich durch Spiele beispielsweise in den Käfigfenstern gemäß dem Stand der Technik ergeben kann.

Für die erfindungsgemäße Wirkungsgradverbesserung ist vor allem der maximale axiale Versatz a des Kugelschwerpunkts S relativ zu der Gelenkmittelebene E maßgebend. Dieser wird vor allem über die Zentriersysteme am Käfig 4, d.h. die Käfigführungen 9/11 und 10/12 bestimmt. Für die Positionierung der Kugeln 6 sind zudem die Käfigfenster 5 verantwortlich, d.h. die Anordnung und Gestaltung der Käfigfenster 5 kann ebenfalls für den axialen Versatz a genutzt werden.

Die Wirkung kann auch erreicht werden, wenn die Kugeln 6 gemeinsam keine perfekte Ebene bilden oder gar den Freiheitsgrad aufweisen, die Größe des axialen Versatzes a je nach Betriebspunkt individuell zu variieren.

Es sei an dieser Stelle nochmals hervorgehoben, dass Fig. 4 so einfach wie möglich gehalten wurde, um das technische Prinzip der Erfindung anhand einer möglichen Ausführungsform zu veranschaulichen. Beispielhaft ist in Fig. 4 die Käfigführungsfläche 12 des Gelenkinnenteils 3 zur Gelenkinnenseite, d.h. in Fig. 4 nach links und von der Öffnungsseite weg, versetzt. Ohne Kompensationsmaßnahme kann dies unter Umständen dazu führen, dass das Gleichlaufgelenk 1 nicht montierbar ist oder bei großen Beugewinkeln klemmt. Deswegen wird gegebenenfalls im Gelenk ein Kompensationsspiel vorgesehen. In Fig. 4 ist ein solches Spiel beispielhaft zwischen der Kugel und den Kugellaufbahnen dargestellt.

Ein entsprechendes Spiel kann auch an einer oder beiden Käfigführungsflächen 11/12, wobei sich unter Last bei Beugung des Gleichlauffestgelenks 1 die in Fig. 4 dargestellten Kontaktpunkte K_{I} und K_{A} und die daraus resultierenden Wirklinien W_{I} und W_{A} für die Kräfte ergeben.

Ein entsprechendes Spiel kann schließlich auch an anderer Stelle vorgesehen werden.

Die Erfindung wurde vorstehend anhand eines Gleichlauffestgelenks erläutert, bei dem genau ein Laufbahnsystem aus gleichartigen Kugellaufbahnpaare 7/8 vorhanden ist und die Öffnungswinkel aller Kugellaufbahnpaare 7/8 zur gleichen Seite ausgerichtet sind. Das erfindungsgemäße Prinzip lässt sich jedoch auch auf Gleichlauffestgelenke mit mehreren Laufbahnsystemen anwenden. Ein Beispiel hierfür sind Gegenbahngelenke, bei denen ein Teil der Kugellaufbahnpaare 7/8 zur einen Seite des Gelenks und der andere Teil der Kugellaufbahnpaare 7/8 zur anderen Seite des Gelenks hin öffnet.

Bei einem Gleichlauffestgelenk mit mehreren Laufbahnsystemen kann die oben erläuterte Verschiebung des Kugelschwerpunkts S auf das jeweilige Laufbahnsysteme bezogen werden. Dabei ist ein Versatz a der Kugeln 6 auch wieder jeweils in Öffnungsrichtung der Laufbahnen des jeweiligen Laufbahnsystems von Vorteil.

Bei einem Gleichlauffestgelenk mit mehreren Laufbahnsystemen beträgt die Anzahl der Kugellaufbahnpaare und damit der Kugeln vorzugsweise acht, kann jedoch auch größer oder kleiner gewählt werden und beispielsweise sechs betragen.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

- 1: Gleichlauffestgelenk
- 2: Gelenkaußenteil
- 3: Gelenkinnenteil
- 4: Käfig
- 5: Käfigfenster
- 6: Kugel
- 7: Kugellaufbahn am Gelenkaußenteil
- 8: Kugellaufbahn am Gelenkinnenteil
- 9: sphärische Außenfläche des Käfigs
- 10: sphärische Innenfläche des Käfigs
- 11: Käfigführungsfläche am Gelenkaußenteil
- 12: Käfigführungsfläche am Gelenkinnenteil
- a: axialer Versatz
- A: Mittelachse des Gelenkaußenteils
- B: Mittelachse des Gelenkinnenteils
- C: Mittelachse des Käfigs
- E: Gelenkmittelebene (Halbwinkelebene)
- K_{A}: Kontakt Käfig/Gelenkaußenteil
- K_{I}: Kontakt Käfig/Gelenkinnenteil
- M: Schnittpunkt der Mittelachsen A und B
- M_{LBA}: Krümmungsmittelpunkt der Kugellaufbahnmitten des Gelenkaußenteils 2
- M_{LBI}: Krümmungsmittelpunkt der Kugellaufbahnmitten des Gelenkinnenteils 3
- M_{KA}: Krümmungsmittelpunkt der sphärischen Außenfläche 9 und der Käfigführungsfläche 11
- M_{KI}: Krümmungsmittelpunkt der sphärischen Innenfläche 10 und der Käfigführungsfläche 12
- OFF_{LBA}: axialer Offset des Krümmungsmittelpunkts der Kugellaufbahn am Gelenkaußenteil
- OFF_{LBI}: axialer Offset des Krümmungsmittelpunkts der Kugellaufbahn am Gelenkinnenteil
- P_{A}: Schnittpunkt der Mittelachse des Käfigs 4 mit der Wirklinie W_{A} der resultierenden Normalkraft aus dem Kontakt des Käfigs 4 mit dem Gelenkaußenteil 2
- P_{I}: Schnittpunkt der Mittelachse des Käfigs 4 mit der Wirklinie W_{I} der resultierenden Normalkraft aus dem Kontakt des Käfigs 4 mit dem Gelenkinnenteil 3
- R_{LBA}: Krümmungsradius der Kugellaufbahn 7 am Gelenkaußenteil
- R_{LBI}: Krümmungsradius der Kugellaufbahn 8 am Gelenkinnenteil
- R_{KA}: Krümmungsradius der äußeren Käfigführung
- R_{KI}: Krümmungsradius der inneren Käfigführung
- S: gemeinsamer Kugelschwerpunkt der Kugeln
- W_{A}: Wirklinie der resultierenden Normalkraft aus dem Kontakt des Käfigs mit dem Gelenkaußenteil
- W_{I}: Wirklinie der resultierenden Normalkraft aus dem Kontakt des Käfigs mit dem Gelenkinnenteil
- β: Gelenkbeugewinkel

## Patentansprüche

1. Gleichlauffestgelenk (1), umfassend:
ein Gelenkaußenteil (2) mit einer Vielzahl von Kugellaufbahnen (7) am Innenumfang, ein Gelenkinnenteil (3) mit einer Vielzahl von Kugellaufbahnen (8) am Außenumfang, wobei jeweils eine Kugellaufbahn (7) am Gelenkaußenteil (2) und eine Kugellaufbahn (8) am Gelenkinnenteil (3) ein Kugellaufbahnpaar bilden,
eine Kugel (6) je Kugellaufbahnpaar zur Drehmomentübertragung, und
einen Käfig (4), der zwischen dem Gelenkaußenteil (2) und dem Gelenkinnenteil (3) angeordnet ist und Fenster (5) aufweist, in denen die Kugeln (6) aufgenommen sind,
**dadurch gekennzeichnet, dass**
für mindestens ein Laufbahnsystem gleichartiger Kugellaufbahnpaare der gemeinsame Schwerpunkt S aller Kugeln (6) gegenüber einer Gelenkmittelebene (E) einen axialen Versatz a aufweist, wobei bei gestrecktem Gleichlauffestgelenk (1) besagte Gelenkmittelebene E eine Ebene durch einen Punkt M und normal zur Mittelachse (C) des Käfigs (4) ist, M der Mittelpunkt zwischen zwei Punkten P_{A} und P_{I} ist, wobei P_{A} der Schnittpunkt der Mittelachse (C) des Käfigs (4) mit der Wirklinie W_{A} der resultierenden Normalkraft aus dem Kontakt des Käfigs (4) mit dem Gelenkaußenteil (2) ist sowie P_{I} der Schnittpunkt der Mittelachse (C) des Käfigs (4) mit der Wirklinie W_{I} der resultierenden Normalkraft aus dem Kontakt des Käfigs (4) mit dem Gelenkinnenteil (3) ist, wobei der maximale axiale Versatz a des gemeinsamen Kugelschwerpunkts S zur Gelenkmittelebene E bei gestrecktem Gelenk größer als 0,2 mm ist und maximal 1 mm beträgt.

2. Gleichlauffestgelenk (1) nach Anspruch 1, **dadurch gekennzeichnet, dass** das Gleichlauffestgelenk (1) eine Betriebsposition aufweist, in der für mindestens ein Laufbahnsystem gleichartiger Kugellaufbahnpaare der gemeinsame Schwerpunkt (S) aller Kugeln (6) gegenüber der Gelenkmittelebene (E), welche als Symmetrieebene der Mittelachsen (A, B) des Gelenkaußenteils (2) und des Gelenkinnenteils (3) im Schnittpunkt dieser Mittelachsen (A, B) bei gebeugtem Gleichlauffestgelenk (1) definiert ist, besagten axialen Versatz (a) aufweist.

3. Gleichlauffestgelenk (1) nach Anspruch 1 oder 2, **dadurch gekennzeichnet, dass** die Verlagerungsrichtung des gemeinsamen Schwerpunkts S aller Kugeln (6) gegenüber der Gelenkmittelebene E der Richtung des Kraftvektors der Steuerkraft aus den axialen Offsets der Kugellaufbahnen (7, 8) gegenüber der Gelenkmittelebene E auf die Kugeln (6) entspricht.

4. Gleichlauffestgelenk (1) nach einem der Ansprüche 1 bis 3, **dadurch gekennzeichnet, dass** der Käfig (4) mit seiner Außenseite am Gelenkaußenteil (2) und mit seiner Innenseite am Gelenkinnenteil (3) geführt ist, wobei die Krümmungszentren (M_{KA}, M_{KI}) dieser beiden Führungen axial zueinander versetzt sind.

5. Gleichlauffestgelenk (1) nach einem der Ansprüche 1 bis 4, **dadurch gekennzeichnet, dass** die Krümmungszentren (M_{LBA}, M_{LBI}) der Kugellaufbahnen (7, 8) am Gelenkaußenteil (2) und am Gelenkinnenteil (3) axial zueinander versetzt sind.

6. Gleichlauffestgelenk (1) nach Anspruch 6, **dadurch gekennzeichnet, dass** die Mitte zwischen den Krümmungszentren (M_{KA}, M_{KI}) der Käfigführungen zur Mitte zwischen den Krümmungszentren (M_{LBA}, M_{LBI}) der Kugellaufbahnen (7, 8) axial versetzt ist.

7. Gleichlauffestgelenk (1) nach einem der Ansprüche 1 bis 6, **dadurch gekennzeichnet, dass** die Käfigführung am Gelenkaußenteil (2) und/oder am Gelenkinnenteil (3) zumindest eine kugelige Kontaktfläche am Käfig (4) oder am korrespondierenden Gelenkbauteil (2, 3) aufweist.

8. Gleichlauffestgelenk (1) nach einem der Ansprüche 1 bis 7, **dadurch gekennzeichnet, dass** dieses als Gegenbahngelenk mit mindestens zwei Laufbahnsystemen ausgebildet ist.

## Claims

1. Constant velocity fixed joint (1), comprising:
a joint outer part (2) with a multiplicity of ball races (7) on the inner circumference,
a joint inner part (3) with a multiplicity of ball races (8) on the outer circumference,
one ball race (7) on the joint outer part (2) and one ball race (8) on the joint inner part (3) in each case forming a ball race pair,
one ball (6) per ball race pair for the transmission of torque, and
a cage (4) which is arranged between the joint outer part (2) and the joint inner part (3) and has windows (5), in which the balls (6) are received,
**characterized in that**,
for at least one race system of identical ball race pairs, the common centre of gravity S of all the balls (6) has an axial offset a with respect to a joint centre plane (E), the said joint centre plane E being, in the case of an elongated constant velocity fixed joint (1), a plane through a point M and perpendicular with respect to the centre axis (C) of the cage (4), M being the centre point between two points P_{A} and P_{I}, P_{A} being the point of intersection (C) of the cage (4) with the line of action W_{A} of the perpendicular force resulting from the contact of the cage (4) with the joint outer part (2), and P_{I} being the point of intersection of the centre axis (C) of the cage (4) with the line of action W_{I} of the perpendicular force resulting from the contact of the cage (4) with the joint inner part (3), the maximum axial offset a of the common ball centre of gravity S with respect to the joint centre plane E in the case of an elongated joint being greater than 0.2 mm and at most 1 mm.

2. Constant velocity fixed joint (1) according to Claim 1, **characterized in that** the constant velocity fixed joint (1) has an operating position, in which, for at least one race system of identical ball race pairs, the common centre of gravity (S) of all the balls (6) has the said axial offset (a) with respect to the joint centre plane (E) which is defined as the plane of symmetry of the centre axes (A, B) of the joint outer part (2) and the joint inner part (3) at the point of intersection of these centre axes (A, B) in the case of a bent constant velocity fixed joint (1).

3. Constant velocity fixed joint (1) according to Claim 1 or 2, **characterized in that** the movement direction of the common centre of gravity S of all the balls (6) with respect to the joint centre plane E corresponds to the direction of the force vector on the balls (6) of the control force from the axial offsets of the ball races (7, 8) with respect to the joint centre plane E.

4. Constant velocity fixed joint (1) according to one of Claims 1 to 3, **characterized in that** the cage (4) is guided by way of its outer side on the joint outer part (2) and by way of its inner side on the joint inner part (3), the centres of curvature (M_{KA}, M_{KI}) of these two guides being offset axially with respect to one another.

5. Constant velocity fixed joint (1) according to one of Claims 1 to 4, **characterized in that** the centres of curvature (M_{LBA}, M_{LBI}) of the ball races (7, 8) on the joint outer part (2) and on the joint inner part (3) are offset axially with respect to one another.

6. Constant velocity fixed joint (1) according to Claim 6, **characterized in that** the centre between the centres of curvature (M_{KA}, M_{KI}) of the cage guides is offset axially with respect to the centre between the centres of curvature (M_{LBA}, M_{LBI}) of the ball races (7, 8).

7. Constant velocity fixed joint (1) according to one of Claims 1 to 6, **characterized in that** the cage guide on the joint outer part (2) and/or on the joint inner part (3) has at least one spherical contact face on the cage (4) or on the corresponding joint component (2, 3).

8. Constant velocity fixed joint (1) according to one of Claims 1 to 7, **characterized in that** it is configured as a counter track joint with at least two race systems.

## Revendications

1. Joint homocinétique fixe (1), comprenant :
une partie extérieure de joint (2) pourvue d'une pluralité de pistes de roulement de billes (7) sur sa périphérie intérieure,
une partie intérieure de joint (3) pourvue d'une pluralité de pistes de roulement de billes (8) sur sa périphérie extérieure,
dans lequel respectivement une piste de roulement de billes (7) sur la partie extérieure de joint (2) et une piste de roulement de billes (8) sur la partie intérieure de joint (3) forment une paire de pistes de roulement de billes,
une bille (6) par paire de pistes de roulement de billes en vue du transfert de couple, et
une cage (4) qui est disposée entre la partie extérieure de joint (2) et la partie intérieure de joint (3) et présente des fenêtres (5) dans lesquelles sont logées les billes (6),
**caractérisé en ce que** pour au moins un système de pistes de roulement d'un même type de paires de pistes de roulement de billes, le centre de gravité S commun de toutes les billes (6) présente un décalage axial a par rapport à un plan médian de joint (E), dans lequel, lorsque le joint homocinétique fixe (1) est étiré, ledit plan médian de joint E est un plan passant par un point M et perpendiculaire à un axe médian (C) de la cage (4), M est le milieu entre deux points P_{A} et P_{I}, dans lequel P_{A} est le point d'intersection de l'axe médian (C) de la cage (4) avec une ligne d'action W_{A} de la force normale résultante du contact de la cage (4) avec la partie extérieure de joint (2), et P_{I} est le point d'intersection de l'axe médian (C) de la cage (4) avec la ligne d'action W_{I} de la force normale résultante du contact de la cage (4) avec la partie intérieure de joint (3), dans lequel le décalage axial a maximal du centre de gravité S commun de la bille au plan médian de joint E lorsque le joint est étiré est supérieur à 0,2 mm et mesure au maximum 1 mm.

2. Joint homocinétique fixe (1) selon la revendication 1, **caractérisé en ce que** le joint homocinétique fixe (1) présente une position de fonctionnement dans laquelle, pour au moins un système de pistes de roulement d'un même type de paires de pistes de roulement de billes, le centre de gravité (S) commun de toutes les billes (6) présente ledit décalage axial (a) par rapport au plan médian de joint (E) qui est défini comme le plan de symétrie des axes médians (A, B) de la partie extérieure de joints (2) et de la partie intérieure de joint (3) au point d'intersection de ces axes médians (A, B), lorsque le joint homocinétique fixe (1) est plié.

3. Joint homocinétique fixe (1) selon la revendication 1 ou 2, **caractérisé en ce que** la direction de décalage du centre de gravité S commun de toutes les billes (6) par rapport au plan médian de joint E correspond à la direction du vecteur de force de la force de commande, issue des décalages axiaux des pistes de roulement de billes (7, 8) par rapport au plan médian de joint E, sur les billes (6).

4. Joint homocinétique fixe (1) selon l'une quelconque des revendications 1 à 3, **caractérisé en ce que** la cage (4) est guidée par sa face extérieure sur la partie extérieure de joint (2) et par sa face intérieure sur la partie intérieure de joint (3), dans lequel les centres de courbure (M_{KA}, M_{KI}) de ces deux guidages sont axialement décalés l'un par rapport à l'autre.

5. Joint homocinétique fixe (1) selon l'une quelconque des revendications 1 à 4, **caractérisé en ce que** les centres de courbure (M_{LBA}, M_{LBI}) des pistes de roulement de billes (7, 8) sur la partie extérieure de joint (2) et sur la partie intérieure de joint (3) sont axialement décalés l'un par rapport à l'autre.

6. Joint homocinétique fixe (1) selon la revendication 6, **caractérisé en ce que** le milieu entre les centres de courbure (M_{KA}, M_{KI}) des guidages de cage est axialement décalé par rapport au milieu entre les centres de courbure (M_{LBA}, M_{LBI}) des pistes de roulement de billes (7, 8).

7. Joint homocinétique fixe (1) selon l'une quelconque des revendications 1 à 6, **caractérisé en ce que** le guidage de cage sur la partie extérieure de joint (2) et/ou sur la partie intérieure de joint (3) présente au moins une surface de contact sphérique avec la cage (4) ou sur le composant de joint (2, 3) correspondant.

8. Joint homocinétique fixe (1) selon l'une quelconque des revendications 1 à 7, **caractérisé en ce qu'**il est réalisé sous forme de joint de piste opposée comprenant au moins deux systèmes de pistes de roulement.
